# EUROPÄISCHE PATENTSCHRIFT

(11) **EP 4 217 626 B1**
(45) Veröffentlichungstag und Bekanntmachung des Hinweises auf die Patenterteilung: **12.08.2026**
(21) Anmeldenummer: 21773760.0
(22) Anmeldetag: 08.09.2021
(51) Int. Cl.: F16H 25/06

(54) **ANTRIEB, AUFWEISEND EIN VON EINEM ELEKTROMOTOR ANGETRIEBENES GETRIEBE**
DRIVE COMPRISING A TRANSMISSION DRIVEN BY AN ELECTRIC MOTOR
ENTRAÎNEMENT COMPRENANT UNE TRANSMISSION ENTRAÎNÉE PAR UN MOTEUR ÉLECTRIQUE

(30) Priorität: 28.09.2020 DE 102020005944
(43) Veröffentlichungstag der Anmeldung: 02.08.2023
(73) Patentinhaber: SEW-EURODRIVE GmbH & Co. KG, 76646 Bruchsal (DE)
(72) Erfinder: LUTZ, Markus, 68794 Oberhausen-Rheinhausen (DE); SCHÜTTERLE, Ingo, 76646 Bruchsal (DE); KOKER, Torsten, 76297 Stutensee (DE); WÖPPERMANN, Markus, 76307 Karlsbad (DE); HALLER, Sascha, 76135 Karlsruhe (DE)
(86) Internationale Anmeldenummer: PCT/EP2021/074711
(87) Internationale Veröffentlichungsnummer: WO 2022/063580

(56) Entgegenhaltungen:
- EP-A1- 2 474 757
- WO-A1-2014/010550
- DE-A1- 102013 011 799
- DE-A1- 3 906 053
- DE-T5- 112012 003 027

## Beschreibung

Die Erfindung betrifft einen Antrieb, aufweisend ein von einem Elektromotor angetriebenes Getriebe.

Es ist allgemein bekannt, dass bei einem Umlaufgetriebe Planetenräder mit einem Sonnenrad und einem Hohlrad im Eingriff sind.

Aus der DE 39 06 053 A1 ist ein Getriebe nach Art eines Spannungswellengetriebes bekannt.

Aus der US 2017 / 0 063 193 A1 ist ein Reduktionslager mit Elektromotor bekannt.

Aus der WO 2019 / 186 330 A1 ist ein Steuersystem für ein Fahrzeug bekannt.

Aus der DE 10 2013 011 799 A1 ist ein Getriebe bekannt.

Aus der DE 11 2012 003027 T5 ist als nächstliegender Stand der Technik eine Motoranordnung mit einem Drehzahlminderer bekannt.

Aus der EP 2 474 757 A1 ist ein Reduziergetriebe bekannt.

Aus der WO 2014/010550 A1 ist eine variable Ventilanordnung bekannt.

Aus der DE 39 06 053 A1 ist ein Getriebe nach Art eines Spannungswellengetriebes bekannt.

Aus der DE 10 2013 011 799 A1 ist ein Getriebe bekannt.

Der Erfindung liegt daher die Aufgabe zugrunde, ein Getriebe mit hoher Übersetzung bei hohem übertragenem Drehmoment und hoher Verdrehsteifigkeit kompakt und stabil auszubilden.

Erfindungsgemäß wird die Aufgabe bei dem Antrieb nach den in Anspruch 1 angegebenen Merkmalen gelöst.

Wichtige Merkmale der Erfindung bei dem Antrieb sind, dass der Antrieb ein von einem Elektromotor angetriebenes Getriebe aufweist,
wobei eine eintreibende Welle, insbesondere Hohlwelle, des Getriebes einen ersten Exzenterbereich aufweist,
der von einem ersten Kurvenscheibenbereich radial umgeben ist,
wobei erste Rollen in einem Käfig mit radialem Freiheitsgrad, insbesondere radial hin- und herbewegbar aufgenommen sind, welcher mit der abtreibenden Welle einstückig, insbesondere einteilig, ausgebildet ist,
wobei der Käfig mit der abtreibenden Welle sowohl relativ zum Kurvenscheibenbereich als auch relativ zur Eintreibenden Welle drehbar gelagert ist,
wobei im Betrieb, insbesondere also beidrehender Eintreibender Welle, die ersten Rollen vom Exzenterbereich zum Abrollen und/oder gleiten am Kurvenscheibenbereich gezwungen werden.

Von Vorteil ist dabei, dass ein hohes Drehmoment und eine hohe Übersetzungszahl in einem kompakten Raumbereich übertragbar sind, wobei der Antrieb stabil und verdrehsteif ausführbar ist. Denn der Käfig ist mit der abtreibenden Welle einstückig, insbesondere einteilig, ausführbar. Außerdem ist der Käfig mit einer zweiten Reihe von Rollen, also zweiten Rollen, ausstattbar. Somit ist eine besonders stabile Übertragung erreichbar, also Laufruhe bei der Drehmomentübertragung.

Bei einer vorteilhaften Ausgestaltung hängt der Innenradius des ersten Kurvenscheibenbereichs, insbesondere also der Radialabstand des Kurvenscheibenbereichs bezogen auf die Drehachse der eintreibenden Welle, vom Umfangswinkel, insbesondere vom auf die Drehachse der eintreibenden Welle bezogenen Umfangswinkel, periodisch ab, insbesondere ist er nicht konstant. Von Vorteil ist dabei, dass eine einfache Herstellung des Kurvenscheibenbereichs ausführbar ist und durch die Periodizität die Übersetzungszahl vorgebbar ist.

Bei einer vorteilhaften Ausgestaltung hängt im Exzenterbereich der Außenradius der eintreibenden Welle vom Umfangswinkel ab, insbesondere ist er also nicht konstant, insbesondere wobei die Abhängigkeit des Außenradius nur ein einziges Maximum und ein einziges Minimum als Funktion des Umfangswinkels aufweist. Von Vorteil ist dabei, dass an der eintreibenden Welle ein exzentrischer Bereich ausformbar ist und die nachfolgende Feinbearbeitung kostengünstig ausführbar ist. Mittels der Exzentrizität, der Periodizität und der Anzahl der Rollen beziehungsweise des Durchmessers der Rollen ist die Übersetzungszahl variierbar oder erreichbar.

Bei einer vorteilhaften Ausgestaltung überlappt der vom Exzenterbereich überdeckte axiale Bereich zumindest mit dem vom Kurvenscheibenbereich überdeckten axialen Bereich. Von Vorteil ist dabei, dass die Rollen radial zwischen den beiden Bereichen anordenbar sind und im selben axialen Bereich.

Erfindungsgemäß ist die eintreibende Welle über eine oder mehrere Getriebestufen von der Rotorwelle des Elektromotors angetrieben,
wobei ein erstes Verzahnungsteil mit der Rotorwelle drehfest verbunden ist und ein zweites Verzahnungsteil mit der eintreibenden Welle drehfest verbunden ist. Von Vorteil ist dabei, dass ein direktes Antreiben der eintreibenden Welle oder ein über eine Getriebestufe indirekt ausgeführtes Antreiben der eintreibenden Welle ermöglicht ist. Wichtig ist dabei, dass von der Getriebestufe ein höheres Drehmoment oder auch Losbrechmoment aufbringbar ist also bei direktem Antreiben durch den Elektromotor.

Bei einer vorteilhaften Ausgestaltung ist die eintreibende Welle mittels eines Lagers, insbesondere Wälzlagers, insbesondere Kugellagers, relativ zum Käfig mit abtreibender Welle drehbar gelagert, insbesondere wobei der Außenring des Lagers von der abtreibenden Welle aufgenommen ist, insbesondere gegen eine Stufe der abtreibenden Welle angestellt ist, und der Innenring des Lagers auf die eintreibende Welle aufgesteckt ist, insbesondere gegen eine Stufe der eintreibenden Welle angestellt ist. Von Vorteil ist dabei, dass die relative Drehzahl des Lagers geringer ist als bei einer Lagerung der eintreibenden Welle zum Gehäuse hin. Somit sind geringere Verluste bewirkbar. Außerdem ist eine Verbesserung der Stabilität erreichbar, da die relative Ausrichtung der eintreibenden Welle zum Käfig hin mit einfachen Mitteln hochpräzise erreichbar ist.

Erfindungsgemäß ist auf den ersten Exzenterbereich ein Lager, insbesondere Kugellager, aufgesteckt, auf welchem ein Ring aufgesteckt ist, auf welchem die ersten Rollen abrollen und/oder gleiten. Von Vorteil ist dabei, dass eine Verringerung der Reibungsverluste erreichbar ist und auch eine verbesserte Laufruhe.

Bei einer vorteilhaften Ausgestaltung weist die eintreibende Welle, insbesondere Hohlwelle, des Getriebes einen zweiten Exzenterbereich auf, welcher in Umfangsrichtung zum ersten Exzenterbereich einen Versatzwinkel, insbesondere einen Versatzwinkel von 180° oder einen Versatzwinkel von 360°/P, wobei P die Anzahl der Exzenterbereiche der eintreibenden Welle ist, aufweist,
wobei der zweite Exzenterbereich von einem zweiten Kurvenscheibenbereich radial umgeben ist,
wobei zweite Rollen in dem Käfig ebenfalls mit radialem Freiheitsgrad, insbesondere radial hin- und herbewegbar, aufgenommen sind,
wobei im Betrieb, insbesondere also beidrehender, eintreibender Welle, die zweiten Rollen vom zweiten Exzenterbereich zum Abrollen und/oder gleiten am zweiten Kurvenscheibenbereich gezwungen werden. Von Vorteil ist dabei, dass höhere Stabilität und Laufruhe erreichbar sind, indem die Unwucht verringerbar ist.

Bei einer vorteilhaften Ausgestaltung hängt der Innenradius des zweiten Kurvenscheibenbereichs, insbesondere also der Radialabstand des zweiten Kurvenscheibenbereichs bezogen auf die Drehachse der eintreibenden Welle, vom Umfangswinkel, insbesondere vom auf die Drehachse der eintreibenden Welle bezogenen Umfangswinkel, periodisch ab, insbesondere und ist nicht konstant. Von Vorteil ist dabei, dass die Anzahl der Perioden des ersten Kurvenscheibenbereichs der Anzahl der Perioden des ersten Kurvenscheibenbereichs gleicht und somit das Getriebe betreibbar ist, insbesondere mit einer Reduzierung der Unwucht. Denn durch eine vorteilhafte radiale Verteilung der Exzenter wird eine Reduzierung der Unwucht bewirkt.

Vorteiligerweise sind die Anzahlen der Perioden der Kurvenbereiche zueinander gleich, so dass das Getriebe betriebsbereit ist. Eine Reduzierung der Unwucht wird durch einen vorteilhaften Versatz der Exzenterbereiche in Umfangsrichtung bewirkbar. Insbesondere ist ein Versatzwinkel in Umfangsrichtung von 360°geteilt durch die Anzahl der Exzenterbereiche vorteilig.

Bei vorteilhafter Wahl der Periodenanzahl sind zum einen die Exzenter so verteilbar, dass die Unwucht minimiert wird, zum anderen können die Kurvenscheibenbereiche in Umfangsrichtung deckungsgleich ausgeführt werden, so dass die Kurvenscheibenbereiche aller Rollenreihen als ein einziger langer Kurvenscheibenbereich in einem Kurvenscheibenbauteil ausführbar sind, innerhalb welchem die Rollenreihen zueinander axial versetzt angeordnet sind. Somit sind die Kurvenscheibenbereiche aller Rollenreihen in einem einzigen, insbesondere gemeinsamen, Bauteil darstellbar, was eine wirtschaftliche Herstellbarkeit und einfache Montage ermöglicht.

Bei einer vorteilhaften Ausgestaltung hängt im zweiten Exzenterbereich der Außenradius der eintreibenden Welle vom Umfangswinkel ab, insbesondere und ist also nicht konstant, insbesondere wobei die Abhängigkeit des Außenradius nur ein einziges Maximum und ein einziges Minimum als Funktion des Umfangswinkels aufweist. Von Vorteil ist dabei, dass eine einfache und kostengünstige Herstellung ermöglicht ist und trotzdem ein hohes Drehmoment übertragbar und eine hohe Übersetzungszahl erreichbar ist.

Bei einer vorteilhaften Ausgestaltung überlappt der vom zweiten Exzenterbereich überdeckte axiale Bereich zumindest mit dem vom zweiten Kurvenscheibenbereich überdeckten axialen Bereich. Von Vorteil ist dabei, dass die Rollen radial zwischen den beiden Bereichen anordenbar sind und im selben axialen Bereich.

Erfindungsgemäß ist auf den ersten Exzenterbereich ein Lager, insbesondere Kugellager, aufgesteckt, auf welchem ein Ring aufgesteckt ist, auf welchem die ersten Rollen abrollen und/oder gleiten. Von Vorteil ist dabei, dass eine Verringerung der Reibungsverluste ausführbar ist.

Erfindungsgemäß sind ein erster und zweiter Kurvenscheibenbereich in einem ersten Gehäuseteil integriert ausgebildet, das mit einem zweiten Gehäuseteil verbunden ist, in welchem Lager aufgenommen sind, welche die abtreibende Welle drehbar lagern, insbesondere wobei der jeweilige Innenring dieser Lager auf der abtreibenden Welle aufgenommen ist und der jeweilige Außenring dieser Lager in dem zweiten Gehäuseteil aufgenommen sind. Von Vorteil ist dabei, dass eine einfache und robuste Herstellung ermöglicht ist. Bei gleicher Anzahl von Perioden im ersten und im zweiten Kurvenscheibenbereich sind diese beiden Kurvenscheibenbereiche durch einen einzigen Kurvenscheibenbereich ausführbar, der in axialer Richtung den von dem ersten und dem von dem zweiten Kurvenscheibenbereich überdeckten axialen Bereich umfasst, wodurch eine besonders einfache und kostengünstige Herstellung ermöglicht ist, insbesondere da nur ein einziges Teil für alle Kurvenscheibenbereiche verwendbar ist.

Gegebenenfalls sind auch mehr als zwei Kurvenscheibenbereiche in einem Gehäuseteil integrierbar. Bei vorteilhafter Wahl der Periodenanzahl kann dann ein, insbesondere ausreichend langer, Kurvenscheibenbereich für alle Rollenreihen genutzt werden, was die Wirtschaftlichkeit bei der Herstellung erhöht.

Erfindungsgemäß ist ein innerer Wellendichtring, in der abtreibenden Welle aufgenommen, der zur eintreibenden Welle hin abdichtet, indem dessen Dichtlippe auf der eintreibenden Welle läuft,
wobei ein weiterer Wellendichtring im zweiten Gehäuseteil aufgenommen ist, der zur abtreibenden Welle hin abdichtet, indem dessen Dichtlippe auf einem auf die abtreibende Welle aufgesteckten Ringteil läuft. Von Vorteil ist dabei, dass nach radial innen und nach radial außen eine Abdichtung gegen Öl ausführbar ist. Somit ist Öl im Innenraum des Getriebes vorsehbar.

Bei einer vorteilhaften Ausgestaltung ist ein drittes Gehäuseteil, insbesondere Adaptergehäuse, mit dem ersten und zweiten Gehäuseteil verbunden, insbesondere mittels in Umfangsrichtung gleichmäßig beabstandeter Verbindungsschrauben,
wobei das dritte Gehäuseteil mit dem Gehäuse des Elektromotors verbunden ist,
wobei das dritte Gehäuseteil das erste und zweite Zahnrad zumindest teilweise gehäusebildend umgibt. Von Vorteil ist dabei, dass die Gehäuseteile von den Verbindungsschrauben aufeinander zu gedrückt werden und somit eine stabile Einhausung entsteht.

Bei einer vorteilhaften Ausgestaltung weist der Käfig zur Aufnahme der ersten Rollen erste Ausnehmungen auf, welche in Umfangsrichtung voneinander regelmäßig, insbesondere gleichmäßig beabstandet sind,
insbesondere wobei die ersten Ausnehmungen am Käfig auf derselben radialen und axialen Position angeordnet sind. Von Vorteil ist dabei, dass die vorzugsweise rechteckförmigen Ausnehmungen eine möglichst große Laufruhe bewirken, insbesondere bei hoher Anzahl von Rollen.

Bei einer vorteilhaften Ausgestaltung der Käfig zur Aufnahme der zweiten Rollen zweite Ausnehmungen aufweist, welche in Umfangsrichtung voneinander regelmäßig, insbesondere gleichmäßig beabstandet sind,
insbesondere wobei die zweiten Ausnehmungen am Käfig auf derselben radialen und axialen Position angeordnet sind. Von Vorteil ist dabei, dass eine verbesserte Laufruhe und eine höhere Drehmomentübertragung erreichbar ist.

Bei einer vorteilhaften Ausgestaltung weisen die ersten Ausnehmungen zu den zweiten Ausnehmungen einen Versatz in Umfangsrichtung auf,
wobei die Anzahl N der ersten Ausnehmungen gleich groß ist wie die Anzahl der zweiten Ausnehmungen,
insbesondere wobei der Versatz 360° / N beträgt, wobei N die Anzahl der ersten Ausnehmungen ist. Von Vorteil ist dabei, dass mit zunehmender Anzahl eine verbesserte Laufruhe erreichbar ist. Außerdem verteilt sich dann auch das Drehmoment auf eine größere Anzahl vor Rollen, so dass insgesamt ein höheres Drehmoment übertragbar ist.

In der vorliegenden Schrift wird stets und "eintreibend" auch "antreibend" subsummiert.

Die Erfindung wird nun anhand von schematischen Abbildungen näher erläutert:

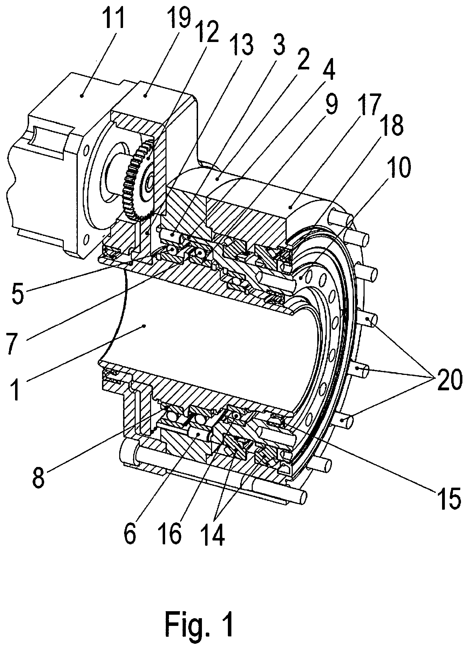

In der Figur 1 ist ein erfindungsgemäßer Antrieb angeschnitten in Schrägansicht dargestellt.

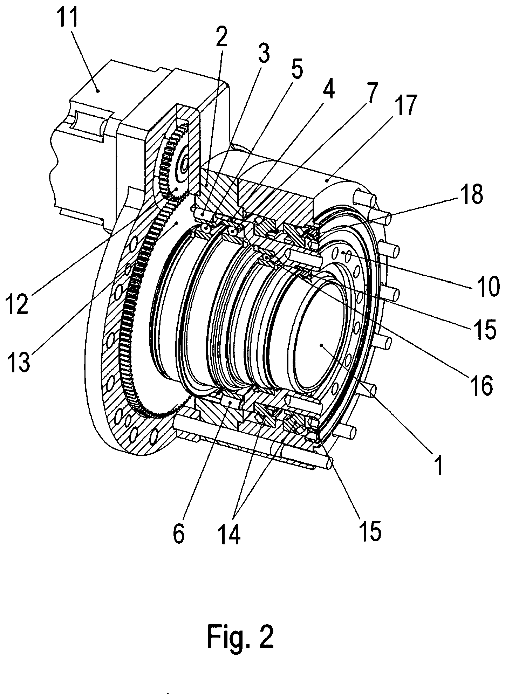

IN der Figur 2 ist eine zugehörige teilweise angeschnittene Darstellung des Antriebs gezeigt.

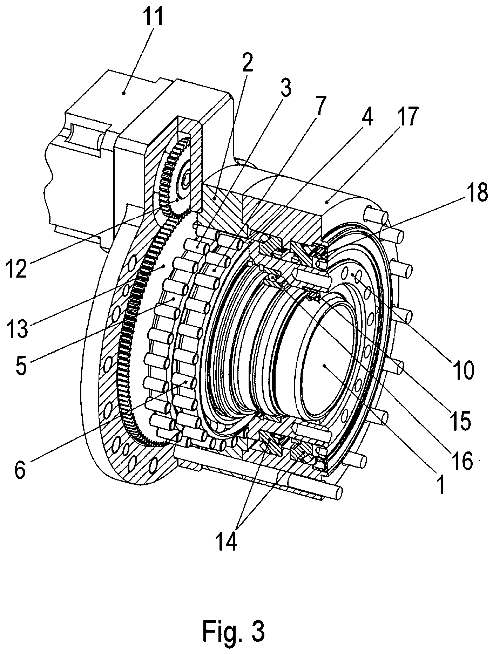

In der Figur 3 ist ein wiederum zugehörige, teilweise angeschnittene aber anders angeschnittene Darstellung des Antriebs dargestellt.
In der Figur 4 ist ein Käfig 4 in Schrägansicht dargestellt, in welchem erste Rollen 3 und zweite Rollen 4 aufgenommen sind und am ersten Gehäuseteil 2 abrollen und/oder gleiten.

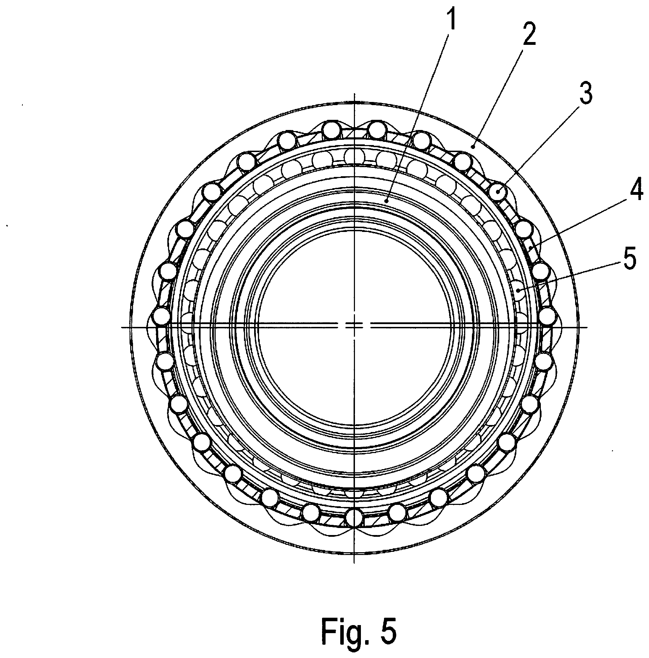

In der Figur 5 ist ein Querschnitt durch das erste Gehäuseteil 2 dargestellt, wobei nur die von den ersten Rollen 3 gebildete Reihe sichtbar ist.

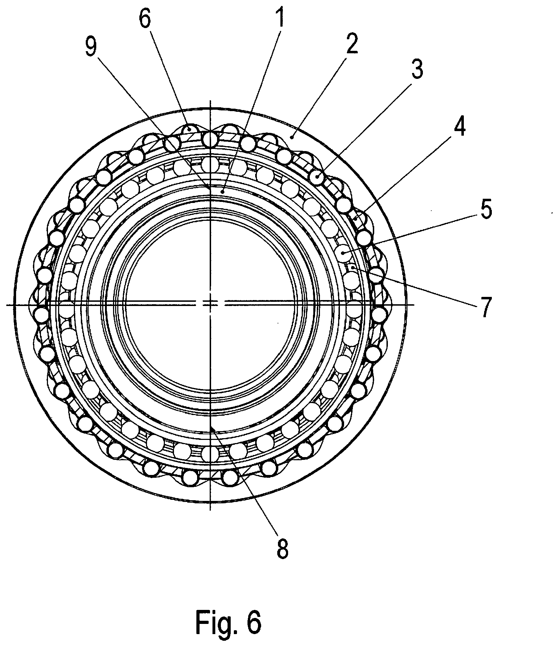

In der Figur 6 ist ein weiterer Querschnitt durch das erste Gehäuseteil 2 dargestellt, wobei die von den ersten Rollen 3 gebildete Reihe und die von den zweiten Rollen 4 gebildete Reihe sichtbar ist.

Wie in den Figuren dargestellt, ist ein erstes Zahnrad 12 drehfest mit der Rotorwelle eines Elektromotors 11 verbunden und treibt ein zweites Zahnrad 13 an, das mit dem ersten Zahnrad im Eingriff ist.

Das zweite Zahnrad 13 ist drehfest verbunden mit der Hohlwelle 1, welche einen ersten Exzenterbereich 8 und einen axial davon beabstandeten zweiten Exzenterbereich 9 aufweist.

Im jeweiligen Exzenterbereich (8, 9) ist der Außenradius als Funktion des Umfangswinkels nicht konstant, sondern vom Umfangswinkel abhängig. Insbesondere weist die Funktion ein einziges Maximum auf und ein einziges Minimum.

Der zum Maximum des ersten Exzenterbereichs 8 gehörige Umfangswinkel ist in Umfangsrichtung beabstandet vom zum Maximum des zweiten Exzenterbereichs 9 gehörigen Umfangswinkel.

Der Außenumfang des jeweiligen Exzenterbereichs (8, 9) ist kreiszylindrisch, insbesondere also kreisförmig. Somit ist auf den ersten Exzenterbereich 8 ein erstes Lager 5 und auf den zweiten Exzenterbereich 9 ein zweites Lager 7 aufsetzbar.

Das erste Lager 5 ist als Kugellager ausführbar und das zweite Lager 7 ebenfalls als ein Kugellager.

Auf dem Außenumfang des ersten Lagers 5 sind erste Rollen vorgesehen, die entweder direkt auf dem Außenring des ersten Lagers 5 abrollen und/oder gleiten oder auf einem auf den Außenring des ersten Lagers 5 aufgeschobenem Ring.

Diese ersten Rollen 3 sind in einem Käfig 4 gehalten und dadurch in Umfangsrichtung voneinander beabstandet. Denn der Käfig 4 weist für jede erste Rolle 3 eine Ausnehmung auf, in welcher diese aufgenommen ist. Die Ausnehmungen sind vorzugsweise zueinander gleichartig, insbesondere identisch, ausgeformt und/oder auf dem selben Radialabstand angeordnet und/oder überdecken den selben axialen Bereich.

Ebenso sind von den ersten Rollen 3 axial beabstandet die zweiten Rollen 6 in einem Käfig 4 gehalten und dadurch in Umfangsrichtung voneinander beabstandet. Denn der Käfig 4 weist für jede zweite Rolle 6 eine zweite Ausnehmung auf, in welcher diese zweite Rolle 6 aufgenommen ist. Die zweiten Ausnehmungen sind vorzugswiese zueinander gleichartig, insbesondere identisch, ausgeformt und/oder auf dem selben Radialabstand angeordnet und/oder überdecken den selben axialen Bereich.

Nach radial innen berührt also jede der ersten und zweiten Rollen den jeweiligen Exzenterbereich.

Nach radial außen berühren die ersten Rollen einen ersten, an der Innenseite eines ersten Gehäuseteils 2 ausgebildeten Kurvenscheibenbereich und rollen an diesem ab.

Dieser erste Kurvenscheibenbereich weist einen vom Umfangswinkel periodisch abhängenden, insbesondere sinusförmig abhängenden, Innenradius auf. Der Kurvenscheibenbereich ist mit dem Gehäuseteil 2 einstückig, also einteilig, ausgebildet.

Der Kurvenscheibenbereich weist eine diskrete Drehsymmetrie auf, insbesondere deren Zähligkeit der Anzahl der in Umfangsrichtung ausgebildeten, vollständigen Perioden gleicht.

Die zugehörige Symmetrieachse der Drehsymmetrie ist identisch mit der Drehachse der Hohlwelle 1.

Nach radial außen berühren die zweiten Rollen 6 einen zweiten, an der Innenseite des ersten Gehäuseteils 2 ausgebildeten Kurvenscheibenbereich und rollen an diesem ab.

Dieser zweite Kurvenscheibenbereich weist einen vom Umfangswinkel periodisch abhängenden, insbesondere sinusförmig abhängenden, Innenradius auf. Der zweite Kurvenscheibenbereich ist mit dem Gehäuseteil 2 einstückig, also einteilig, ausgebildet.

Der zweite Kurvenscheibenbereich weist eine diskrete Drehsymmetrie auf, insbesondere deren Zähligkeit der Anzahl der in Umfangsrichtung ausgebildeten, vollständigen Perioden des zweiten Kurvenscheibenbereichs gleicht.

Die zugehörige Symmetrieachse der Drehsymmetrie des zweiten Kurvenscheibenbereichs ist identisch mit der Drehachse der Hohlwelle 1.

Der zweite Kurvenscheibenbereich ist axial neben dem ersten Kurvenscheibenbereich angeordnet.

Wie in den Figuren dargestellt, ist der zweite Kurvenscheibenbereich gleichartig zum ersten Kurvenscheibenbereich ausgeführt, weist also keinen Versatz in Umfangsrichtung auf. Die sinusförmige Abhängigkeit des Innenradius des zweiten Kurvenscheibenbereichs vom Umfangswinkel ist also identisch zur sinusförmige Abhängigkeit des Innenradius des ersten Kurvenscheibenbereichs vom Umfangswinkels.

Bei weiteren erfingungsgemäßen Ausführungsbeispielen ist allerdings ein Versatz des zweiten Kurvenscheibenbereichs in Umfangsrichtung um eine halbe Periodenlänge zum ersten Kurvenscheibenbereich ausgeführt. Insbesondere beträgt der Versatz also 180° / M, wobei M die Anzahl der Perioden des Kurvenscheibenbereichs in Umfangsrichtung ist. Alternativ ist auch ein Versatz um 180° ausführbar, insbesondere wobei dann der Versatz der Exzenterbereiche zueinander entfallen darf aber nicht muss. Bei weiteren Ausführungsbeispielen sind weitere Rollenreihen axial beabstandet von der ersten und zweiten vorgesehen, die dann ebenfalls am Kurvenscheibenbereich abrollen oder gleiten, wobei die zugehörigen Exzenterbereiche einen Versatz von 360° / N aufweisen, wobei N die Anzahl der Rollenreihen ist.

Wie in den Figuren gezeigt, ist der zweite Kurvenscheibenbereich zum ersten Kurvenscheibenbereich gleichartig ausgeführt und somit der gesamte Kurvenscheibenbereich einfach und kostengünstig herstellbar.

Die Periodenanzahl und auch die die Exzentrizität ermöglichen eine hohe Übersetzungszahl bei hohem Drehmoment.

Wie in den Figuren gezeigt, umgibt der Käfig 4 die Welle 1. Hierzu ist also an jeder axialen Position der kleinste Radialabstand des Käfigs 4 größer als der größte Radialabstand der Welle 1 in dem vom Käfig 4 überdeckten axialen Bereich.

An jeder axialen Position ist der vom Käfig 4 überdeckte Radialabstandsbereich radial beabstandet von dem von der Welle 1 überdeckten Radialabstandsbereich und/oder radial beabstandet und/oder weiter außen angeordnet.

Die axiale Richtung ist parallel zur Drehachse der Welle 1 ausgerichtet. Die genannten Radialabstände sind hier also stets auf die axiale Achse bezogen. Ebenso sind die Umfangsrichtung und die Umfangswinkel auf diese axiale Richtung bezogen.

Der Käfig 4 ist mit der abtreibenden Welle 10 einstückig, also einteilig, ausgeführt.

Somit ist in einem ersten axialen Bereich dieses Teils der Käfig 4 und abtriebsseitig axial angrenzend an den Käfig 4 die abtreibende Welle 10 ausgeformt, die an ihrer axialen Stirnseite Axialbohrungen, die als Gewindebohrungen ausgeführt sind, aufweist. Somit ist eine anzutreibende Vorrichtung mit ihrem drehbar gelagerten Element schraubverbindbar mit der Welle 1.

Die abtreibende Welle 10 ist zur Welle 1 hin mittels eines weiteren Lagers 16 gelagert und zum Gehäuse hin, insbesondere zu einem mit dem ersten Gehäuseteil 2 verbundenen zweiten Gehäuseteil 17, mittels zweier Lager (14), die vorzugsweise als Schräglager ausgeführt sind, drehbar gelagert.

Auf diese Weise ist der Käfig 4 samt abtreibender Welle 10 zu einem möglichst ruhigen Drehbetrieb gezwungen.

Zur Unwuchtminderung und weiteren Verbesserung der Laufruhe sind der erste und zweite Exzenterbereich 8 und 9 gleichartig aber um 180° in Umfangsrichtung zueinander versetzt ausgeführt. Bei etwaiger Verwendung von weiteren Exzenterbereichen und entsprechend zugeordneten Rollenreihen ist ein in Umfangsrichtung vorgesehener Versatz von 360° / N zwischen jeweils zwei nächstbenachbarten Rollenreihe ermöglicht, wobei die Anzahl der Rollenreihen der Anzahl der Exzenterbereiche gleicht.

Des Weiteren ist sowohl zur Welle 1 hin, insbesondere also nach radial innen, ein Wellendichtring 15 vorgesehen und andererseits zum Gehäuse hin, insbesondere also nach radial außen zum Gehäuse hin ein weiterer Wellendichtring 18 vorgesehen.

Der Wellendichtring 15 ist von der abtreibenden Welle 10 aufgenommen und seine Dichtlippe läuft auf einem fein bearbeiteten Bereich der Welle 1.

Der Wellendichtring 18 ist im zweiten Gehäuseteil 17 aufgenommen und seine Dichtlippe läuft auf der abtreibenden Welle 10 oder auf einem auf die abtreibende Welle 10 aufgesteckten Ring.

Die vorzugsweise als Schräglager ausgeführten Lager der Lagerung 14 sind mit ihrem Außenring im zweiten Gehäuseteil 17 aufgenommen und mit ihrem Innenring auf die abtreibende Welle 10 aufgesteckt.

Der Innenring des Weiteren Lagers 16, insbesondere Wälzlagers, insbesondere Kugellagers, ist auf die Welle 1 aufgesteckt. Der Außenring des Weiteren Lagers 16 ist in der abtreibenden Welle 10 aufgenommen.

Der Innenring des ersten Lagers 5 ist auf den ersten Exzenterbereich 8 aufgesteckt.

Der Innenring des zweiten Lagers 7 ist auf den zweiten Exzenterbereich 9 aufgesteckt.

Der Außenring des ersten Lagers 5 oder ein auf diesen Außenring aufgestecktes Ringteil fungiert als Rollfläche für die ersten Rollen 3.

Der Außenring des zweiten Lagers 7 oder ein auf diesen Außenring aufgestecktes Ringteil fungiert als Rollfläche für die zweiten Rollen 6.

Ein drittes Gehäuseteil 19 umgibt zumindest teilweise die aus dem ersten und zweiten Zahnrad (12, 13) gebildete Stirnradstufe. Das dritte Gehäuseteil 19 wird mit dem Gehäuse des das erste Zahnrad 12 antreibenden Elektromotors verbunden.

Auf der von dem Elektromotor 11 abgewandten Seite des dritten Gehäuseteils 19 ist das erste Gehäuseteil 2 und das zweite Gehäuseteil 10 angeordnet. Das erste Gehäuseteil 2 ist zwischen dem zweiten Gehäuseteil 10 und dem dritten Gehäuseteil 19 angeordnet. Das erste, zweite und dritte Gehäuseteil (19, 2, 10) ist mittels durch diese drei Gehäuseteile (19, 2, 10) durchgehenden Verbindungsschrauben 20 verbunden.

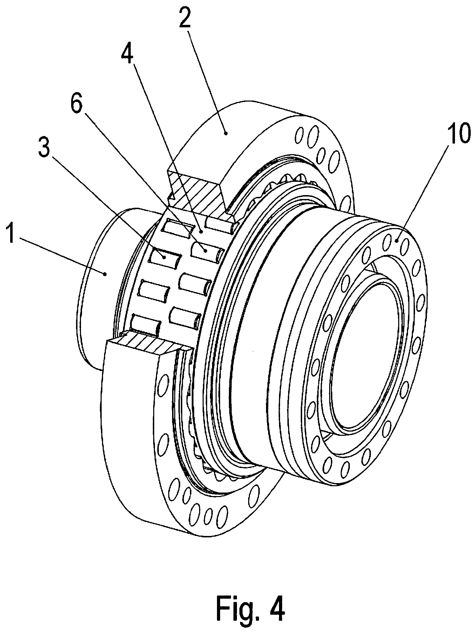

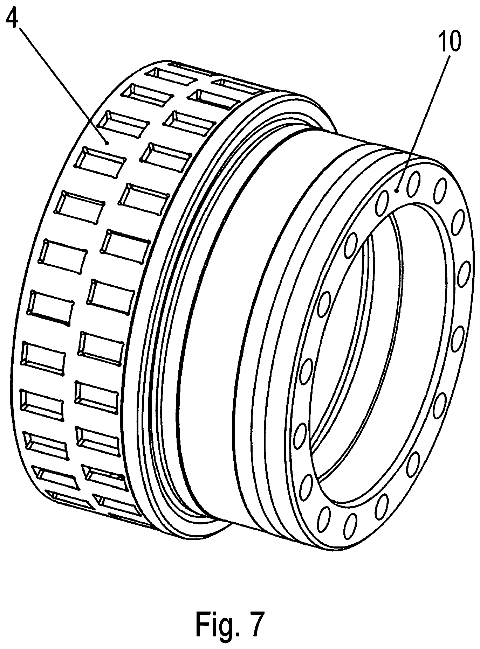

Wie in den Figuren, insbesondere in den Figuren 4 und 7, ersichtlich, bilden die ersten Rollen 3 und auch die die ersten Rollen 3 aufnehmenden Ausnehmungen des Käfigs 4 in Umfangsrichtung eine erste Reihe.

Ebenso bilden die zweiten Rollen 6 und auch die die zweiten Rollen 6 aufnehmenden Ausnehmungen des Käfigs 4 in Umfangsrichtung eine zweite Reihe.

Die ersten Rollen 3 sind in Umfangsrichtung voneinander gleichmäßig, insbesondere regelmäßig, beabstandet. Ebenso sind die zweiten Rollen 6 in Umfangsrichtung voneinander gleichmäßig, insbesondere regelmäßig, beabstandet.

Die Rollen (3, 6) jeder Rollenreihe befinden sich alle auf einem Kreis bzw. die Achsen der Rollen (3, 6) befinden sich auf einem gedachten Zylinder. Der Mittelpunkt dieses Kreises liegt jeweils auf der Achse des zugehörigen Exzenterbereichs bzw. die Achse dieses jeweiligen Zylinders ist konzentrisch mit dem zugehörigen Exzenterbereich. Dementsprechend sind die Zylinderachsen parallel, aber radial versetzt zueinander angeordnet. Die ersten Rolle 3 liegen am ersten Exzenterbereich 8 an und die zweiten Rollen 6 liegen am zweiten Exzenterbereich 9 an. Die beiden Reihen sind also nicht zueinander koaxial ausgerichtet. Darüber hinaus ist also derjenige Zylinder, welcher die Drehsymmetrieachsen der ersten Rollen 3 enthält, axial beabstandet zu demjenigen Zylinder, welcher die Drehsymmetrieachsen der zweiten Rollen 6 enthält.

In Umfangsrichtung ist die erste Reihe zur zweiten Reihe aber versetzt um eine halbe Periodenlänge der ersten Rollen 3 innerhalb der ersten Reihe.

Jede zweite Rolle 6 weist also einen Versatzwinkel von 180° / N zu einer jeweiligen ersten Rolle 3 lauf, wobei N die Anzahl der in der ersten Reihe angeordneten, ersten Rollen 3 ist.

Auf diese Weise wird eine geringere Drehmomentwelligkeit erreicht.

Bei weiteren erfindungsgemäßen Ausführungsbeispielen sind weitere Reihen mit weiteren Rollen und zugehörigen Kurvenscheibenanordnungen vorgesehen.

### Bezugszeichenliste

1 Hohlwelle mit Exzenterbereichen
2 erstes Gehäuseteil
3 erste Rolle
4 Käfig für erste Rollen 1 und zweite Rollen 6
5 erstes Lager, insbesondere Wälzlager, insbesondere Kugellager
6 zweite Rolle
7 zweites Lager, insbesondere Wälzlager, insbesondere Kugellager
8 erster Exzenterbereich der Hohlwelle 1
9 zweiter Exzenterbereich der Hohlwelle 1
10 abtreibende Welle
11 Elektromotor
12 erstes Zahnrad
13 zweites Zahnrad
14 Lagerung
15 innerer Wellendichtring
16 weiteres Lager, insbesondere Wälzlager, insbesondere Kugellager
17 zweites Gehäuseteil
18 äußerer Wellendichtring
19 drittes Gehäuseteil
20 Verbindungsschrauben

## Patentansprüche

1. Antrieb, aufweisend ein von einem Elektromotor (11) angetriebenes Getriebe,
wobei eine Welle (1), insbesondere Hohlwelle, des Getriebes einen ersten Exzenterbereich aufweist,
der von einem ersten Kurvenscheibenbereich radial umgeben ist,
wobei der erste und ein zweiter Kurvenscheibenbereich in einem ersten Gehäuseteil (2) integriert ausgebildet sind, das mit einem zweiten Gehäuseteil (17) verbunden ist, in welchem Lager aufgenommen sind, welche eine abtreibende Welle (10) des Getriebes drehbar lagern,
wobei erste Rollen (3) in einem Käfig (4) mit radialem Freiheitsgrad, insbesondere radial hin- und herbewegbar aufgenommen sind, welcher mit der abtreibenden Welle (10) einstückig, insbesondere einteilig, ausgebildet ist,
wobei der Käfig (4) mit der abtreibenden Welle (10) sowohl relativ zum ersten Kurvenscheibenbereich als auch relativ zur Welle (1) drehbar gelagert ist,
wobei im Betrieb, insbesondere also beidrehender Welle (1), die ersten Rollen (3) vom Exzenterbereich (8) zum Abrollen und/oder gleiten am ersten Kurvenscheibenbereich gezwungen werden,
**dadurch gekennzeichnet, dass**
die Welle (1) über eine oder mehrere Getriebestufen von einer Rotorwelle des Elektromotors (11) angetrieben wird,
wobei ein erstes Verzahnungsteil mit der Rotorwelle drehfest verbunden ist und ein zweites Verzahnungsteil mit der Welle (1) drehfest verbunden ist,
wobei ein innerer Wellendichtring (15) in der abtreibenden Welle (10) aufgenommen ist, der zur Welle (1) hin abdichtet, indem dessen Dichtlippe auf der Welle (1) läuft,
wobei ein weiterer Wellendichtring (18) im zweiten Gehäuseteil (17) aufgenommen ist, der zur abtreibenden Welle (10) hin abdichtet, indem dessen Dichtlippe auf einem auf die abtreibende Welle (10) aufgesteckten Ringteil läuft,
wobei auf den ersten Exzenterbereich (8) ein Lager, insbesondere Kugellager, aufgesteckt ist, auf welchem ein Ring aufgesteckt ist, auf welchem die ersten Rollen (3) abrollen und/oder gleiten.

2. Antrieb nach Anspruch 1,
**dadurch gekennzeichnet, dass**
der Innenradius des ersten Kurvenscheibenbereichs, insbesondere also der Radialabstand des Kurvenscheibenbereichs bezogen auf die Drehachse der Welle (1), vom Umfangswinkel, insbesondere vom auf die Drehachse der Welle (1) bezogenen Umfangswinkel, periodisch abhängt, insbesondere nicht konstant ist.

3. Antrieb nach einem der vorangegangenen Ansprüche,
**dadurch gekennzeichnet, dass**
im Exzenterbereich (8) der Außenradius der Welle (1) vom Umfangswinkel abhängt, insbesondere also nicht konstant ist, insbesondere wobei die Abhängigkeit des Außenradius nur ein einziges Maximum und ein einziges Minimum als Funktion des Umfangswinkels aufweist.

4. Antrieb nach einem der vorangegangenen Ansprüche,
**dadurch gekennzeichnet, dass**
der vom Exzenterbereich (8) überdeckte axiale Bereich mit dem vom Kurvenscheibenbereich überdeckten axialen Bereich zumindest überlappt.

5. Antrieb nach einem der vorangegangenen Ansprüche,
**dadurch gekennzeichnet, dass**
die Welle (1) mittels eines Lagers (16), insbesondere Wälzlagers, insbesondere Kugellagers, relativ zum Käfig (4) mit abtreibender Welle (10) drehbar gelagert ist,
insbesondere wobei der Außenring des Lagers (16) von der abtreibenden Welle (10) aufgenommen ist, insbesondere gegen eine Stufe der abtreibenden Welle (10) angestellt ist, und der Innenring des Lagers (16) auf die Welle (1) aufgesteckt ist, insbesondere gegen eine Stufe der Welle (1) angestellt ist.

6. Antrieb nach einem der vorangegangenen Ansprüche,
**dadurch gekennzeichnet, dass**
die Welle (1), insbesondere Hohlwelle, des Getriebes einen zweiten Exzenterbereich (9) aufweist, welcher in Umfangsrichtung zum ersten Exzenterbereich (8) einen Versatzwinkel, insbesondere einen Versatzwinkel von 180° oder einen Versatzwinkel von 360°/P, wobei P die Anzahl der Exzenterbereiche der Welle (1) ist, aufweist,
wobei der zweite Exzenterbereich (9) von einem zweiten Kurvenscheibenbereich radial umgeben ist,
wobei zweite Rollen (6) in dem Käfig (4) ebenfalls mit radialem Freiheitsgrad, insbesondere radial hin- und herbewegbar, aufgenommen sind,
wobei im Betrieb, insbesondere also beidrehender Welle (1), die zweiten Rollen (6) vom zweiten Exzenterbereich (9) zum Abrollen und/oder gleiten am zweiten Kurvenscheibenbereich gezwungen werden.

7. Antrieb nach Anspruch 6,
**dadurch gekennzeichnet, dass**
der Innenradius des zweiten Kurvenscheibenbereichs, insbesondere also der Radialabstand des zweiten Kurvenscheibenbereichs bezogen auf die Drehachse der Welle (1), vom Umfangswinkel, insbesondere vom auf die Drehachse der Welle (1) bezogenen Umfangswinkel, periodisch abhängt, insbesondere nicht konstant ist,
und/oder dass
im zweiten Exzenterbereich (9) der Außenradius der Welle (1) vom Umfangswinkel abhängt, insbesondere also nicht konstant ist, insbesondere wobei die Abhängigkeit des Außenradius nur ein einziges Maximum und ein einziges Minimum als Funktion des Umfangswinkels aufweist,
und/oder dass
der vom zweiten Exzenterbereich (9) überdeckte axiale Bereich mit dem vom zweiten Kurvenscheibenbereich überdeckten axialen Bereich zumindest überlappt.

8. Antrieb nach einem der vorangegangenen Ansprüche,
**dadurch gekennzeichnet, dass**
der jeweilige Innenring dieser Lager auf der abtreibenden Welle (10) aufgenommen ist und der jeweilige Außenring dieser Lager in dem zweiten Gehäuseteil (17) aufgenommen sind.

9. Antrieb nach einem der vorangegangenen Ansprüche,
**dadurch gekennzeichnet, dass**
ein drittes Gehäuseteil (19), insbesondere Adaptergehäuse, mit dem ersten und zweiten Gehäuseteil (2) verbunden ist, insbesondere mittels in Umfangsrichtung gleichmäßig beabstandeter Verbindungsschrauben,
wobei das dritte Gehäuseteil (19) mit dem Gehäuse des Elektromotors (11) verbunden ist,
wobei das dritte Gehäuseteil (19) das erste und zweite Zahnrad (12, 13) zumindest teilweise gehäusebildend umgibt.

10. Antrieb nach einem der vorangegangenen Ansprüche,
**dadurch gekennzeichnet, dass**
der Käfig (4) zur Aufnahme der ersten Rollen (3) erste Ausnehmungen aufweist, welche in Umfangsrichtung voneinander regelmäßig, insbesondere gleichmäßig beabstandet sind,
insbesondere wobei die ersten Ausnehmungen am Käfig (4) auf derselben radialen und axialen Position angeordnet sind.

11. Antrieb nach einem der vorangegangenen Ansprüche,
**dadurch gekennzeichnet, dass**
der Käfig (4) zur Aufnahme der zweiten Rollen (6) zweite Ausnehmungen aufweist, welche in Umfangsrichtung voneinander regelmäßig, insbesondere gleichmäßig beabstandet sind,
insbesondere wobei die zweiten Ausnehmungen am Käfig (4) auf derselben radialen und axialen Position angeordnet sind.

12. Antrieb nach einem der vorangegangenen Ansprüche,
**dadurch gekennzeichnet, dass**
die ersten Ausnehmungen zu den zweiten Ausnehmungen einen Versatz in Umfangsrichtung aufweisen,
wobei die Anzahl N der ersten Ausnehmungen gleich groß ist wie die Anzahl der zweiten Ausnehmungen,
insbesondere wobei der Versatz 360° / N beträgt, wobei N die Anzahl der ersten Ausnehmungen ist.

## Claims

1. A drive, having a gear unit driven by an electric motor (11),
wherein a shaft (1), in particular hollow shaft, of the gear unit has a first eccentric region
which is radially surrounded by a first cam disc region,
wherein the first and a second cam disc region are formed integrated in a first housing part (2) which is connected to a second housing part (17) in which are received bearings which rotatably mount an output shaft (10) of the gear unit,
wherein first rollers (3) are received with a radial degree of freedom, in particular so that they can move radially back and forth, in a cage (4) which is formed in one piece, in particular in one part, with the output shaft (10),
wherein the cage (4) with the output shaft (10) is rotatably mounted both relative to the first cam disc region and relative to the shaft (1),
wherein during operation, in particular therefore when the shaft (1) is rotating, the first rollers (3) are forced by the eccentric region (8) to roll and/or slide on the first cam disc region,
**characterised in that**
the shaft (1) is driven by a rotor shaft of the electric motor (11) by way of one or more gear stages,
with a first gearing part being connected non-rotatably to the rotor shaft and a second gearing part being connected non-rotatably to the shaft (1),
with an inner shaft sealing ring (15) which seals off towards the shaft (1) **in that** its sealing lip runs on the shaft (1) being received in the output shaft (10),
with a further shaft sealing ring (18) which seals off towards the output shaft (10) **in that** its sealing lip runs on a ring part mounted on the output shaft (10) being received in the second housing part (17),
with a bearing, in particular ball bearing, being mounted on the first eccentric region (8), on which bearing is mounted a ring on which the first rollers (3) roll and/or slide.

2. A drive according to claim 1,
**characterised in that**
the internal radius of the first cam disc region, in particular therefore the radial distance of the cam disc region relative to the axis of rotation of the shaft (1), depends periodically on the angle at circumference, in particular on the angle at circumference relative to the axis of rotation of the shaft (1), in particular is not constant.

3. A drive according to one of the preceding claims,
**characterised in that**
in the eccentric region (8) the external radius of the shaft (1) depends on the angle at circumference, in particular therefore is not constant, in particular with the dependency of the external radius having only a single maximum and a single minimum as a function of the angle at circumference.

4. A drive according to one of the preceding claims,
**characterised in that**
the axial region covered by the eccentric region (8) at least overlaps with the axial region covered by the cam disc region.

5. A drive according to one of the preceding claims,
**characterised in that**
the shaft (1) is rotatably mounted, relative to the cage (4) with output shaft (10), by means of a bearing (16), in particular rolling bearing, in particular ball bearing,
in particular with the outer ring of the bearing (16) being received by the output shaft (10), in particular being adjusted against a step of the output shaft (10), and the inner ring of the bearing (16) being mounted on the shaft (1), in particular being adjusted against a step of the shaft (1).

6. A drive according to one of the preceding claims,
**characterised in that**
the shaft (1), in particular hollow shaft, of the gear unit has a second eccentric region (9) which in the peripheral direction in relation to the first eccentric region (8) has an offset angle, in particular an offset angle of 180° or an offset angle of 360°/P, where P is the number of the eccentric regions of the shaft (1),
with the second eccentric region (9) being radially surrounded by a second cam disc region,
with second rollers (6) likewise being received with a radial degree of freedom, in particular so that they can move radially back and forth, in the cage (4),
with during operation, in particular therefore when the shaft (1) is rotating, the second rollers (6) being forced by the second eccentric region (9) to roll and/or slide on the second cam disc region.

7. A drive according to claim 6,
**characterised in that**
the internal radius of the second cam disc region, in particular therefore the radial distance of the second cam disc region relative to the axis of rotation of the shaft (1), depends periodically on the angle at circumference, in particular on the angle at circumference relative to the axis of rotation of the shaft (1), in particular is not constant,
and/or **in that**
in the second eccentric region (9) the external radius of the shaft (1) depends on the angle at circumference, in particular therefore is not constant, in particular with the dependency of the external radius having only a single maximum and a single minimum as a function of the angle at circumference,
and/or **in that**
the axial region covered by the second eccentric region (9) at least overlaps with the axial region covered by the second cam disc region.

8. A drive according to one of the preceding claims,
**characterised in that**
the respective inner ring of these bearings is received on the output shaft (10) and the respective outer ring of these bearings are received in the second housing part (17).

9. A drive according to one of the preceding claims,
**characterised in that**
a third housing part (19), in particular adapter housing, is connected to the first and second housing part (2), in particular by means of connecting screws uniformly spaced apart in the peripheral direction,
with the third housing part (19) being connected to the housing of the electric motor (11),
with the third housing part (19) surrounding the first and second gear wheel (12, 13) at least partly in a housing-forming manner.

10. A drive according to one of the preceding claims,
**characterised in that**
the cage (4), for receiving the first rollers (3), has first cutouts which are regularly, in particular uniformly, spaced apart from each other in the peripheral direction,
in particular with the first cutouts being arranged on the cage (4) at the same radial and axial position.

11. A drive according to one of the preceding claims,
**characterised in that**
the cage (4), for receiving the second rollers (6), has second cutouts which are regularly, in particular uniformly, spaced apart from each other in the peripheral direction,
in particular with the second cutouts being arranged on the cage (4) at the same radial and axial position.

12. A drive according to one of the preceding claims,
**characterised in that**
the first cutouts have an offset in the peripheral direction in relation to the second cutouts,
with the number N of the first cutouts being of the same size as the number of the second cutouts,
in particular with the offset being 360°/N, where N is the number of the first cutouts.

## Revendications

1. Entraînement, comprenant un engrenage entraîné par un moteur électrique (11), la transmission comportant un arbre (1), en particulier un arbre creux, présentant une première zone excentrique, qui est radialement entourée par une première zone de came, la première et une deuxième zone de came étant formées de manière intégrée dans une première partie de carter (2), laquelle est reliée à une deuxième partie de carter (17) dans laquelle sont logés des paliers qui logent de manière rotative un arbre de sortie (10) de l'engrenage, les premiers rouleaux (3) étant logés dans une cage (4) avec un degré de liberté radial, en particulier déplaçables radialement d'avant en arrière, laquelle est formée monobloc, en particulier en une seule pièce, avec l'arbre de sortie (10), la cage (4) étant logée de manière rotative avec l'arbre de sortie (10) à la fois par rapport à la première zone de came et par rapport à l'arbre (1), lors du fonctionnement, en particulier donc lors de la rotation de l'arbre (1), les premiers rouleaux (3) étant forcés par la zone excentrique (8) à rouler et/ou à glisser sur la première zone de came, **caractérisé en ce que** l'arbre (1) est entraîné par un ou plusieurs étagements d'engrenage à partir d'un arbre de rotor du moteur électrique (11), un premier élément denté étant relié de manière solidaire en rotation à l'arbre de rotor et un deuxième élément denté étant relié de manière solidaire en rotation à l'arbre (1),
un joint d'étanchéité d'arbre intérieur (15) étant logé dans l'arbre de sortie (10), qui assure l'étanchéité vers l'arbre (1) **en ce que** sa lèvre d'étanchéité roule sur l'arbre (1), un autre joint d'étanchéité d'arbre (18) étant logé dans la deuxième partie de carter (17), qui assure l'étanchéité vers l'arbre de sortie (10) **en ce que** sa lèvre d'étanchéité roule sur un élément annulaire monté sur l'arbre de sortie (10), un palier, en particulier un roulement à billes, étant monté sur la première zone excentrique (8), sur lequel un anneau est monté, sur lequel les premiers rouleaux (3) roulent et/ou glissent.

2. Entraînement selon la revendication 1, **caractérisé en ce que** le rayon intérieur de la première zone de came, en particulier donc la distance radiale de la zone de came par rapport à l'axe de rotation de l'arbre (1), dépend de l'angle périphérique, en particulier de l'angle périphérique par rapport à l'axe de rotation de l'arbre (1), de manière périodique, en particulier n'est pas constant.

3. Entraînement selon l'une des revendications précédentes, **caractérisé en ce que** dans la zone excentrique (8), le rayon extérieur de l'arbre (1) dépend de l'angle périphérique, en particulier donc n'est pas constant, en particulier la dépendance du rayon extérieur ne présente qu'un seul maximum et un seul minimum en fonction de l'angle périphérique.

4. Entraînement selon l'une des revendications précédentes, **caractérisé en ce que** la zone axiale recouverte par la zone excentrique (8) chevauche au moins la zone axiale recouverte par la zone de came.

5. Entraînement selon l'une des revendications précédentes, **caractérisé en ce que** l'arbre (1) est logé de manière rotative par rapport à la cage (4) avec arbre de sortie (10) au moyen d'un palier (16), en particulier d'un roulement, en particulier d'un roulement à billes,
en particulier la bague extérieure du palier (16) étant logée par l'arbre de sortie (10), en particulier appuyée contre un épaulement de l'arbre de sortie (10), et la bague intérieure du palier (16) étant montée sur l'arbre (1), en particulier appuyée contre un épaulement de l'arbre (1).

6. Entraînement selon l'une des revendications précédentes, **caractérisé en ce que** l'arbre (1), en particulier arbre creux, de l'engrenage présente une deuxième zone excentrique (9), laquelle présente, dans la direction périphérique par rapport à la première zone excentrique (8), un angle de décalage, en particulier un angle de décalage de 180° ou un angle de décalage de 360°/P, P étant le nombre de zones excentriques de l'arbre (1),
la deuxième zone excentrique (9) étant radialement entourée par une deuxième zone de came, des deuxièmes rouleaux (6) étant également logés dans la cage (4) avec un degré de liberté radial, en particulier déplaçables radialement d'avant en arrière,
lors du fonctionnement, en particulier donc lors de la rotation de l'arbre (1), les deuxièmes rouleaux (6) étant forcés par la deuxième zone excentrique (9) à rouler et/ou à glisser sur la deuxième zone de came.

7. Entraînement selon la revendication 6, **caractérisé en ce que** le rayon intérieur de la deuxième zone de came, en particulier donc la distance radiale de la deuxième zone de came par rapport à l'axe de rotation de l'arbre (1), dépend de l'angle périphérique, en particulier de l'angle périphérique par rapport à l'axe de rotation de l'arbre (1), de manière périodique, en particulier n'est pas constant, et/ou que dans la deuxième zone excentrique (9), le rayon extérieur de l'arbre (1) dépend de l'angle périphérique, en particulier donc n'est pas constant, en particulier la dépendance du rayon extérieur ne présente qu'un seul maximum et un seul minimum en fonction de l'angle périphérique,
15 et/ou que la zone axiale recouverte par la deuxième zone excentrique (9) chevauche au moins la zone axiale recouverte par la deuxième zone de came.

8. Entraînement selon l'une des revendications précédentes, **caractérisé en ce que** la bague intérieure respective de ces paliers est logée sur l'arbre de sortie (10) et la bague extérieure respective de ces paliers est logée dans la deuxième partie de carter (17).

9. Entraînement selon l'une des revendications précédentes, **caractérisé en ce que** une troisième partie de carter (19), en particulier un carter adaptateur, est reliée à la première et à la deuxième partie de carter (2), en particulier au moyen de vis de fixation espacées uniformément en direction périphérique, la troisième partie de carter (19) étant reliée au carter du moteur électrique (11), la troisième partie de carter (19) entourant en formant un carter la première et la deuxième roue dentée (12, 13) au moins partiellement.

10. Entraînement selon l'une des revendications précédentes, **caractérisé en ce que** la cage (4) présente, pour la réception des premiers rouleaux (3), des premiers évidements, lesquels sont régulièrement, en particulier uniformément espacés les uns des autres en direction périphérique, en particulier les premiers évidements étant disposés sur la cage (4) à la même position radiale et axiale.

11. Entraînement selon l'une des revendications précédentes, **caractérisé en ce que** la cage (4) présente, pour la réception des deuxièmes rouleaux (6), des deuxièmes évidements, lesquels sont régulièrement, en particulier uniformément espacés les uns des autres en direction périphérique, en particulier les deuxièmes évidements étant disposés sur la cage (4) à la même position radiale et axiale.

12. Entraînement selon l'une des revendications précédentes, **caractérisé en ce que** les premiers évidements présentent, par rapport aux deuxièmes évidements, un décalage en direction périphérique, le nombre N des premiers évidements étant égal au nombre des deuxièmes évidements, en particulier le décalage étant de 360° / **N,** N étant le nombre des premiers évidements.
